# EUROPEAN PATENT SPECIFICATION

(11) **EP 2 613 586 B1**
(45) Date of publication and mention of the grant of the patent: **30.03.2016**
(21) Application number: 12305018.9
(22) Date of filing: 06.01.2012
(51) Int. Cl.: H04W 36/00, H04W 36/32, H04W 48/04, H04W 36/04, H04W 84/04

(54) **Improved handling of high-speed users within a heterogeneous mobile network by means of RLF timer adjustment**
Verbesserte Behandlung von Hochgeschwindigkeitsbenutzern innerhalb eines heterogenen mobilen Netzwerks mittels Pico-Zellen-ABS
Traitement amélioré des utilisateurs à grande vitesse dans un réseau mobile hétérogène au moyen d'un réglage de temporisateur RLF

(43) Date of publication of application: 10.07.2013
(73) Proprietor: ALCATEL LUCENT, 92100 Boulogne-Billancourt (FR)
(72) Inventor: Bakker, Hajo-Erich, 71735 Eberdingen (DE); Braun, Volker, 70176 Stuttgart (DE); Weber, Andreas, 74251 Lehrensteinsfeld (DE); Stanze, Oliver, 89075 Ulm (DE)
(74) Representative: ALU Antw Patent Attorneys

(56) References cited:
- WO-A1-2009/096883
- ALCATEL-LUCENT ET AL: "On UE-speed-aware methods for improving the mobility performance in HetNets", 3GPP DRAFT; R2-115211-METHODS FOR IMPROVING MOBILITY PERFORMANCE IN HETNET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 4 October 2011 (2011-10-04), XP050540994, [retrieved on 2011-10-04]
- ALCATEL-LUCENT: "Email discussion: [75#36] â LTE: HetNet: Calibration results of hotspot case", 3GPP DRAFT; R2-115648_[75#36]HOTSPOT_CALIBRATION_RESUL TS_PHASE2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 14 October 2011 (2011-10-14), XP050541212, [retrieved on 2011-10-14]

## Description

### Technical Field of the Invention

The present invention relates to an apparatus and method for managing mobility within a mobile communication network.

### Technical Background of the Invention

Thanks to higher spatial reuse of spectrum, short-radius cells in the range of 50 to 100 meters appear as a promising solution to satisfy bandwidth extensive traffic demands and to enhance the Quality of Experience (QoE) of mobile users.

Heterogeneous Networks (HetNet) are now being deployed, where cells of smaller footprint size (so-called pico or micro cells) are embedded within the coverage area of larger umbrella cells (so-called macro cells), primarily to provide increased capacity in targeted area of data traffic concentration. HetNet try to exploit the spatial variation in user and traffic distribution to efficiently increase the overall capacity of mobile networks.

However, operating high density of pico cells raises major issues not only in terms of radio interference but also in terms of mobility management. Given the short distance separating neighboring pico cells, high-speed users are expected to cross a large number of pico cells in a short time frame. Indeed, the handover rate increases with the user speed and with the inverse of the inter-cell distance.

In this context, guaranteeing a steady QoE to high-speed users moving through a HetNet becomes challenging: cell re-selection, Radio Resource Control (RRC) reconfiguration, attachment to the new cell have to be performed in a very short time to avoid call drop or interruption.

The known solutions to this problem are:
- [Fast HO] The handover procedure is speed up to ensure rapid re-attachment to the most suitable target cell, while preventing unreliable handover attempts.
- [Black List] Pico cells are black-listed for high-speed users.
- [VC] Multiples pico cells are combined into one single aggregated Virtual Cell (VC).

Fast HO encompasses any mechanism that accelerates the handover. However, it proves inefficient at high speeds. Indeed, handover duration can amount up to 1 second. At 90 km/h, the user would have traveled about 25 meters, which is a very long distance when compared to typical cell radius of pico cells.

Added to this, physical layer measurements can be critically affected by distance dependent fading, shadowing, etc. So, handover thresholds have to account for these radio fluctuations and cannot be arbitrarily reduced.

Alternatively, pico cells can be black-listed for high-speed users so as no handover alarm is reported for those cells as they are crossed, meaning high-speed users keep on being handled by the macro cell no matter what the path loss difference is between the macro cell and the respective pico cells, while low-speed users are advantageously handled by pico cells.

The concept of virtual cells (vc) was first described in the article entitled *"*Handoff in virtual cells system based on Distributed antenna" from Y. Mo, J. Xie and B. Huang, published by Wicom in 2006. VC are a set of cooperating radio cells and radio base stations that are seen by the mobile as a single distributed base station. Inside the VC, the mobile can move across the cells without performing handovers. Handover is only performed at VC boundaries. In this way, handover rate is significantly reduced.

VC based handover solution relies on distributed architectures with distributed antennas structure. Added to this, implementation complexity arises from the construction and selection of the vc.

The following document, which might be useful for understanding the invention and its relationship to the prior art, is hereinafter acknowledged, and the relevant background art disclosed therein is briefly discussed.

The 3^{rd} Generation Partnership Project (3GPP) submission from Alcatel-Lucent entitled "on UE-speed Aware Methods for Improving the Mobility Performance in HetNets", and submitted to RAN Working Group 2 (WG2) for 3GPP meting that took place in Zhuhai, China from October 10 till October 14, 2011, discloses the impact of the user speed on the handover performances in HetNets. The high-speed users are not handed over towards pico cells and shall preferably stay connected to the umbrella cell. The use of Almost Blank sub-frames (ABS) within the pico cells while they are being crossed by high-speed users minimizes the level of incurred interference.

### Summary of the Invention

It is an object of the present invention to improve mobility and QoE of high-speed users within a HetNet.

In accordance with a first aspect of the invention, a radio access arrangement comprises a radio transceiver for setting up a radio communication channel for a particular mobile device within a serving macro cell having a large radio coverage area, a radio resource controller for detecting a measurement event for the particular mobile device whereby a neighboring cell was measured as being offset better than the serving macro cell, speed characterization logic for characterizing the particular mobile device as being a high-speed mobile device according to speed information indicative of a speed of the particular mobile device, cell characterization logic for characterizing the neighboring cell as having a substantially shorter radio coverage area enclosed by the large radio coverage area, and mobile configuration logic for configuring the particular mobile device with a timer value, which the particular mobile device shall use for call resumption with the serving macro cell upon radio link failure detection. The radio resource controller is further configured, upon detection of the measurement event, to prepare the neighboring cell for accepting the particular mobile device, but to keep the particular mobile device served by the serving macro cell. The timer value is set to an augmented timer value dedicatedly used by high-speed mobile devices and higher than a default timer value used by further mobile devices in the serving macro cell.

In accordance with another aspect of the invention, a method for managing mobility within a serving macro cell having a large radio coverage area comprises setting up a radio communication channel with a particular mobile device within the serving macro cell, detecting a measurement event for the particular mobile device whereby a neighboring cell was measured as being offset better than the serving macro cell, characterizing the particular mobile device as being a high-speed mobile device according to speed information indicative of a speed of the particular mobile device, characterizing the neighboring cell as having a substantially shorter radio coverage area enclosed by the large radio coverage area, and configuring the particular mobile device with a timer value, which the particular mobile device shall use for call resumption with the serving macro cell upon radio link failure detection. The method further comprises, upon detection of the measurement event, preparing the neighboring cell for accepting the particular mobile device, but keeping the particular mobile device served by the serving macro cell. The timer value is set to an augmented timer value dedicatedly used by high-speed mobile devices and higher than a default timer value used by further mobile devices in the serving macro cell.

In one embodiment of the invention, the radio access arrangement further comprises communication means for receiving an indication from a neighboring radio access node operating the neighboring cell whereby call resumption took place in the neighboring cell with the particular mobile device. The mobile configuration logic is further configured thereupon to increase the augmented timer value.

In one embodiment of the invention, the augmented timer value is set according to an average or maximum time of stay of high-speed mobile devices in a representative pico cell.

In one embodiment of the invention, the speed information comprises times of stay of the particular mobile device in previously visited cells.

In one embodiment of the invention, the speed information is produced by the particular mobile device.

In one embodiment of the invention, the augmented timer value is encoded in a configuration message dedicatedly sent to the particular mobile device.

In one embodiment of the invention, the augmented timer value is transmitted as part of cell system information of the serving macro cell.

The radio access arrangement forms part of a radio access node operating the serving macro cell, such as an evolved NodeB (eNB) for Long Term Evolution (LTE) networks, or is distributed over a radio access node operating the serving macro cell, such as a Base Transceiver Station (BTS) for Global System for Mobility (GSM) networks or a NodeB (NB) for Universal Mobile Terrestrial System (UMTS) networks, and a radio access controller controlling the operation of the radio access node, such as a Base Station Controller (BSC) for GSM networks or a Radio Network Controller (RNC) for UMTS networks.

Embodiments of a method according to the invention correspond with the embodiments of a radio access arrangement according to the invention.

The Radio Link Failure (RLF) procedure, as described in § 10.1.6 of the Technical Specification (TS) entitled *"Evolved Universal Terrestrial Rad i o Access (E-UTRA) and Evolved Universal Terrestrial Rad i o Access Ne twork (E-UTRAN) ; Overall description",* published by the 3rd Generation Partnership Project (3GPP) in June 2009, ref. 3GPP TS 36.300 V9.0.0, allows a User Equipment (UE) to resume communication with a prepared eNB, meaning an eNB which has admitted the UE during an earlier executed handover preparation phase.

If the receive signal power/quality is past an RLF threshold and radio connection gets lost with the serving eNB, then the UE starts T310 timer, and tries to resume first radio communication with the serving eNB while T310 timer is running. If so, the communication resumes as if no problem occurs.

If timer T310 expires and the UE was unable to resume radio communication with the serving eNB, then the UE enters RLF state and tries during a second phase to connect to the cell that offers the best radio link quality, which can the same serving cell, another cell of the same serving eNB, or a cell of another neighboring eNB, by issuing a RRC CONNECTION REESTABLISHMENT REQUEST message.

In the second phase, in order to resume activity and avoid going through RRC_IDLE, the following procedure applies:
- The UE stays in RRC_CONNECTED.
- The UE accesses the cell through the random access procedure;
- The UE identifier used in the random access procedure for contention resolution, i.e. the Cell Radio Network Temporary Identifier (C-RNTI) of the UE in the serving cell where the RLF occurred + the Physical cell Identity (PCI) of that serving cell + the short Message Authentication Code (short MAC-I) based on the encryption keys of that serving cell, is used by the selected eNB to authenticate the UE and to check whether it has a context stored for that UE.
- If the eNB finds a context that matches the identity of the UE, that is to say if the eNB has been prepared for that UE during an earlier executed handover preparation phase, then the RRC connection is resumed. If no context is found, that is to say if the ENB was not prepared for that UE, the current RRC connection is released and the UE goes back to RRC_IDLE state (i.e., the on-going call is dropped).

The present invention proposes to adjust T310 timer value within a serving macro cell according to the UE speed: the high-speed UEs are configured with a dedicated T310 timer value higher than the default T310 timer value typically used in the serving macro cell by further UEs, such as low-speed UEs or UEs with unknown speed.

Also, upon detection of a handover alarm for a high-speed UE towards a neighboring pico cell that has been characterized as being enclosed within the serving macro cell, the serving eNB prepares the neighboring pico cell for that particular UE, but keeps on handling the UE within the serving macro cell.

The serving eNB relies on the augmented T310 timer value for the high-speed UE to resume call directly with the serving macro cell upon radio problem detection while the high-speed UE crosses the neighboring pico cell and undergoes strong radio interference. While T310 timer is running, the UE is not allowed to re-attach to another cell, meaning somehow the traversed pico cell is momentarily black-listed. The serving eNB regains control of the high-speed UE just after radio condition again improves, and without involving the traversed pico cell. A short service interruption may take place, which may be noticeable for real-time traffic.

If, despite the augmented T310 timer value, the high-speed UE enters RLF state and reconnects to the neighboring pico cell as the best suited cell, then a notification is sent back to the source eNB, which in turn further increases the augmented T310 timer value so as to avoid call re-establishment with that neighboring pico cell for future high-speed UEs.

Typically, the augmented T310 timer value that is used for high-speed UEs is set according to an average or maximum resting time (or time of stay) of high-speed UEs in a representative pico cell.

The augmented and default T310 timer values can be both sent as part of the cell system information broadcast in the serving macro cell, in which case the UE autonomously selects the appropriate T310 value according to its speed (e.g., as determined by means of GPS positioning data).

Alternatively, the augmented T310 timer value can be encoded into a RRC configuration message dedicatedly sent to the UE once the UE has been characterized as a high-speed UE by the macro eNB, in which case the macro eNB determines which T310 timer value is applicable according to the UE speed (e.g., as derived from the times of stay of the UE in previously visited cells).

The present invention invention is advantageous in that the probability of call drop is greatly reduced for high-speed users as no handovers take place although numerous pico cells are being traversed, which handovers are likely to fail because of fast signal fading.

The present invention is further advantageous in that the pico cells do not need to be black-listed for high-speed users as per the prior art, thereby easing network planning and configuration.

### Brief Description of the Drawings

The above and other objects and features of the invention will become more apparent and the invention itself will be best understood by referring to the following description of an embodiment taken in conjunction with the accompanying drawings wherein:
- fig. 1 represents an LTE mobile network,
- fig. 2 represents an eNB comprising a radio access arrangement as per the present invention,
- fig. 3 represents a radio coverage area comprising a macro cell and a pico cell,
- fig. 4 represents a message flow chart, and
- fig. 5 represents a UE.

### Detailed Description of the Invention

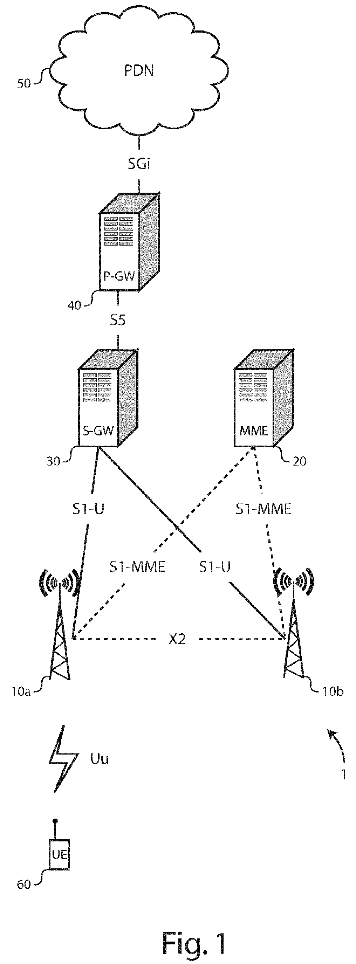

There is seen in fig. 1 a part 1 of an Evolved Radio Access Network (E-RAN) and of an Evolved Packet Core (EPC) comprising the following network elements:
- eNBs 10,
- an MME 20,
- a Serving Gateway (S-GW) 30,
- a Packet Data Network (PDN) Gateway (P-GW) 40, and
- a UE 60.

The eNBs 10 are coupled to the MME 20 through an S1-MME interface, and to the S-GW 30 through an S1-U interface. The S-GW 30 is further coupled to the P-GW 40 through an S5 interface. The P-GW 40 is further coupled to a PDN 50 through an SGi interface. The neighboring eNBs 10 establish neighbor relationships through an X2 interface.

The eNBs 10 operate macro or pico cells with a radio coverage area ranging from a few kilometers up to a few tens meters. The eNBs 10 are configured to set up and operate a radio communication channel (i.e., a set of downlink and uplink traffic radio resources) with the UE 60 through a Uu radio interface.

More noticeably, each of the eNBs 10 hosts the following functions:
- Radio Resource Control (RRC): radio bearer control, radio admission control, connection mobility control, dynamic allocation of resources to UEs in both uplink and downlink (scheduling);
- Routing of user-plane data towards the S-GW;
- Scheduling and transmission of paging messages from the MME;
- Scheduling and transmission of broadcast information;
- Measurement and measurement reporting configuration for mobility and scheduling.

The MME 20 hosts the following functions:
- Non Access Stratum (NAS) signaling;
- Idle mode UE reachability, including control and execution of paging retransmission;
- Tracking Area (TA) list management for UE in idle and active mode;
- S-GW selection;
- MME selection for inter-MME handovers;
- Roaming;
- Authentication;
- Bearer management functions including dedicated bearer establishment.

The S-GW 30 hosts the following functions:
- Local mobility anchor point for inter-eNB handover;
- E-UTRAN idle mode downlink packet buffering and initiation of network triggered service request procedure;
- Lawful interception;
- Packet routing and forwarding;
- Transport level packet marking in the uplink and the downlink;
- downlink and uplink charging per UE, PDN, and Quality of Service (QoS) Class Identifier (QCI).

The P-GW 40 hosts the following functions:
- UE IP address allocation and IP anchor point;
- Per-user based packet filtering (e.g., by means of deep packet inspection);
- Lawful interception;
- Downlink and uplink service level charging, gating and rate enforcement.

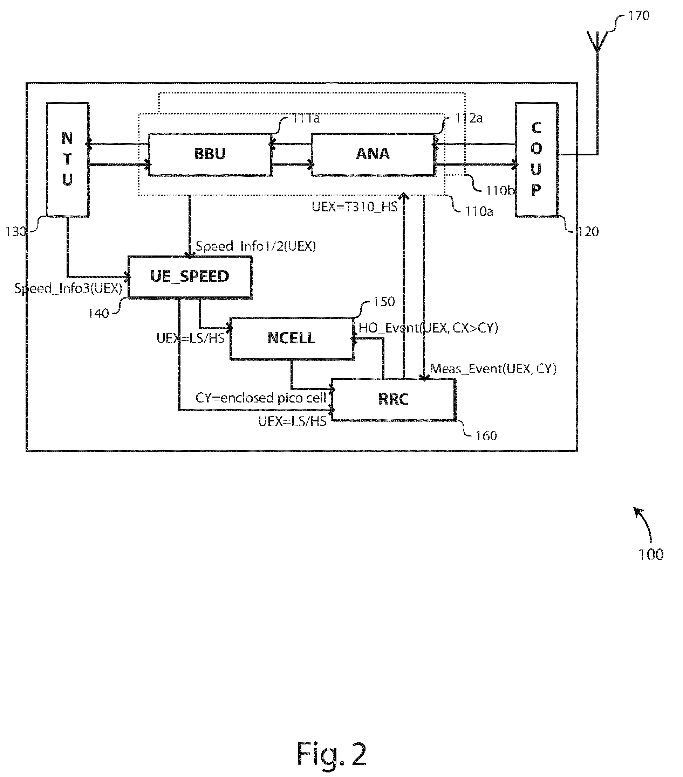

There is seen in fig. 2 further details about an eNB 100 comprising a radio access arrangement as per the present invention, and configured to operate a macro cell CX.

The eNB 100 comprises the following functional blocks:
- one or more transceivers 110, each one comprising a digital base-band unit 111 (or BBU) and an analog band-pass unit 112 (or ANA),
- a coupling unit 120 (or COUP),
- a network termination unit 130 (or NTU),
- a UE speed characterization unit 140 (or UE_SPEED),
- a neighboring cell characterization unit 150 (or NCELL), and
- a radio resource controller 160 (or RRC).

The network termination unit 130 is coupled to the digital base-band unit 111, the digital base-band unit 111 is coupled to the analog band-pass unit 112, the analog band-pass unit 112 is coupled to the coupling unit 120, and the coupling unit 120 is coupled to an external or internal antenna 170. The UE speed characterization unit 140 and the radio resource controller 160 are coupled to the transceivers 110. The UE speed characterization unit 140 is further coupled to the network termination unit 130, to the neighboring cell characterization unit 150, and to the radio resource controller 160. The neighboring cell characterization unit 150 is further coupled to the network termination unit 130 and to the radio resource controller 160.

The transceivers 110 are configured to establish and operate radio communication channels with UEs under control of the radio resource controller 160.

The digital base-band unit 111 is for digitally processing the received and transmit data symbols. The digital base-band unit 111 implements the necessary protocol suites for issuing, terminating or relaying data and control packets.

The analog band-pass unit 112 is for modulating, amplifying and shaping the transmit signal that ultimately feds the antenna 170, and for filtering, amplifying with as little noise as possible and demodulating the received signal from the antenna 170. The analog band-pass 112 unit can be merged with the digital base-band unit, or can be moved closer to the antenna in a so-called Remote Radio Head-end (RRH) configuration.

The coupling unit 120 is for combining and passing the transmit signals from the transceivers 110 towards the antenna 170, and for dispatching the receive signal from the antenna 170 towards the transceivers 110.

The network termination unit 130 accommodates the appropriate Medium Access Control (MAC) and Physical transport (PHY) layers for connecting to a PDN, as well as some frame dispatching logic for routing the incoming/outgoing frames towards the appropriate Input/Output (I/O) ports.

The UE speed characterization unit 140 is configured to characterize a particular UE UEX as belonging to a low-speed category LS or a high-speed category HS by comparing the UE speed to a reference speed threshold. If the UE speed is greater than the reference speed threshold, then the UE is classified as a high-speed UE (HS), else as a low-speed UE (LS).

The UE speed characterization unit 140 may determine the UE speed category according to first speed information Speed_Info1 supplied by the UE (e.g., as estimated from GPS positioning data), and/or according to second speed information Speed_Info2 determined by the eNB 100 (e.g., the Doppler frequency shift is indicative of the radial UE speed with respect to the eNB 100), and/or according to third speed information Speed_Info3 relayed by a source eNB during a handover procedure towards the target cell CX (e.g., as derived from the time spent in previous visited cells, or as explicitly encoded by the source eNB).

The UE speed category is passed to the neighboring cell characterization unit 150 for further cell characterization, or to the radio resource controller 160 for T310 timer value adjustment (see "UEX=LS/HS" in fig. 2) and for further handover decision.

The neighboring cell characterization unit 150 is for determining whether a neighboring cell CY is a pico cell with a radio coverage area that is embraced by the radio coverage area of the macro cell CX.

During a preliminary auto-learning phase, the neighboring cell characterization unit 150 is notified about handover events that took place towards or from the neighbor cell CY that is being characterized, as well as their respective timing (see "HO_Event(UEX, CX>CY)" in fig. 2).

The neighboring cell characterization unit 150 determines statistical properties about these handover events, such as the proportion of ping-pong handovers between the macro cell CX and the neighboring cell CY involving a high-speed UE, as well as the average time of stay of the high-speed UEs within the neighboring cell CY. These statistical properties are used by the neighboring cell characterization unit 150 to characterize the neighboring cell CY as being a pico cell enclosed by the macro cell CX or not. For instance, if the proportion of ping-pong handovers between the macro cell CX and the neighboring cell CY involving a high-speed UE is above a reference threshold, and if the average time of stay is below a reference time of stay, then the neighboring cell CY is characterized as being a pico cell enclosed by the macro cell CX.

During this preliminary auto-learning phase, the eNB 100 lets the UEs, no matter what their speed is, be handed over towards a neighboring target cell that is being characterized so as to collect enough statistics about that cell and its radio coverage properties. Once the characterization of the target cell completes, the UEs are handled as per the present invention.

Alternatively, the neighboring cell characterization unit 150 may use pre-configured cell information, for instance as obtained from a network manager or from a network planning tool.

The result of the neighboring cell characterization is passed to the radio resource controller 160 for further handover decisions (see "CY=enclosed pico cell" in fig. 2).

The radio resource controller 160 is for assigning and managing downlink and uplink radio resources used by the transceivers 110 and the respective UEs for radio communication over the air interface, that is to say a set of time and/or frequency resources assigned to the respective Radio Access Bearers (RAB) for transport of user traffic.

The radio resource controller 160 further configures a measurement policy for all high-speed UEs with an ongoing communication session. The high-speed UEs are configured with an A3 measurement event (neighboring becomes offset better than serving) that comprises an hysteresis value HYS1, a Time-To-Trigger (TTT) value TTT1, and an offset value OFF1 greater than or equal to zero. A so-configured UE will report an A3 measurement event whenever the receive power/quality of a reference signal from a neighboring cell is measured as being better than the receive power/quality of a reference signal from the serving cell by the non-negative offset amount OFF1 and for TTT1 seconds. The hysteresis HYS1 prevents excessive toggling between the A3 entering and leaving condition.

The radio resource controller 160 may configure further measurement events for high-speed UEs.

Alternatively, the radio resource controller 160 may configure UEs to periodically report measurements of the serving and neighboring cells, and may by itself compare the periodic measurement reports with the respective measurement event thresholds so as to detect that a particular neighboring cell is fulfilling a particular measurement event condition.

Upon detection of an A3 measurement event for a particular UE and a particular target cell (see "Meas_Event(UEX, CY)"in fig. 2), the radio resource controller 160 checks whether the reporting UE was classified as a high-speed UE by the UE speed characterization unit 140, and further whether the reported target cell has been characterized as an enclosed pico cell by the cell characterization unit 150. If so, the radio resource controller 160 prepares the target pico cell for that particular UE by issuing a HANDOVER REQUEST message directly to the target eNB operating the target pico cell, or a HANDOVER REQUIRED message to the MME which is relayed towards the target eNB as a HANDOVER REQUEST message, passing necessary information to prepare the handover at the target side, including the UE signaling context and the UE data service context. Yet, the radio resource controller does not relay the handover command from the target eNB towards the UE, and keeps on scheduling the UE in the macro cell.

The radio resource controller 160 is further configured to adjust T310 timer value according to the UE speed.

Once a particular UE has been characterized as a high-speed UE by the UE speed characterization unit 140, the radio resource controller 160 sets T310 timer value to T310_HS for that particular UE, wherein T310_HS denotes a T310 timer value dedicatedly used by high speed UEs (see "UEX=T310_HS" in fig. 2). T310 timer value T310_HS is passed to the high-speed UE by means of a RRC CONNECTION RECONFIGURATION message, and substitutes for the lower T310 timer value T310_LS broadcast in cell system information SYSTEM INFORMATION BLOCK TYPE 2 and used by default by low-speed UEs, such as pedestrian UEs, or by UEs with unknown speed.

T310_HS value is determined according to an average or maximum time of stay of high-speed UEs in a representative pico cell. The representative pico cell can be a modeled pico cell with e.g. a conventional radius, or can be statically determined from a collection of enclosed pico cells deployed within the radio coverage area of the macro cell and/or of further neighboring pico cells, such as previously visited cells reported by a UE during a handover procedure.

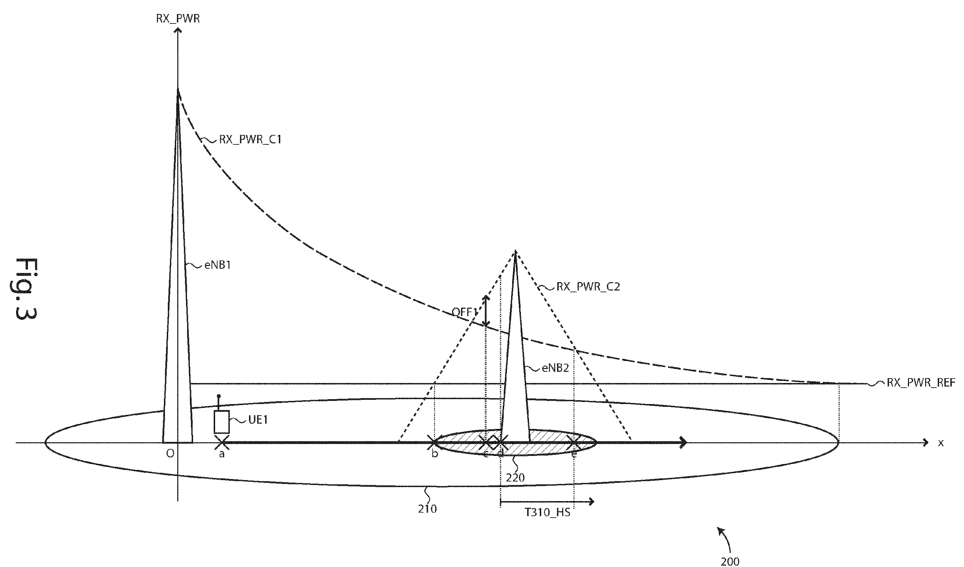

There is seen in fig. 3 a radio coverage area 200 of a mobile communication network across which UEs are moving. The radio coverage area 200 comprises a macro cell C1 having a large-radius radio coverage area 210, and operated by a macro eNB eNB1, and a pico cell C2 having a short-radius radio coverage area 220 enclosed by the radio coverage area 210, and operated by a pico eNB eNB2.

There is further plotted in fig. 3 the downstream receive power (RX_PWR) of a cell reference signal as measured by a UE moving along a line Ox through the radio coverage area 200. A first plot RX_PWR_C1 corresponds to the downlink receive power as measured by the UE of a first cell reference signal transmitted by the macro eNB eNB1 for the macro cell C1 at a first nominal transmit power (long-dashed line), and a second plot RX_PWR_C2 corresponds to the downlink receive power as measured by the UE of a second cell reference signal transmitted by the pico eNB eNB2 for the pico cell C2 at a second nominal transmit power (short-dashed line). Finally, the reference downlink receive power level for achieving a certain SNIR, and thus a certain QoS, is plotted as a bottom straight line RX_PWR_REF (plain line), and ultimately determines the radio coverage area of the respective cells.

A high-speed UE UE1 is assumed to establish a communication session at position a, being an audio call, an audio-video call, or any kind of user data exchange (web browsing, mail synchronization, etc), and then goes along the line Ox through positions b to e.

Alternatively, the UE UE1 may be handed over from a source cell (not shown) towards the macro cell C1, and then go along the line Ox through positions b to e.

The eNB eNB1 characterizes the UE UE1 as being a high-speed UE and dedicatedly configures the UE UE1 with T310 timer value TS310_HS.

At position b, the UE UE1 enters the radio coverage area 220 of the pico cell C2, yet the interference from that cell are still low.

At position c, the UE UE1 reports an A3 measurement event whereby the pico cell C2 was measured as being persistently better than the macro cell C1 by a non-negative offset OFF1.

As the cell C2 is a pico cell enclosed within the macro cell C1, and as the UE UE1 is a high-speed UE, the eNB eNB1 prepares the target cell C2, yet does not relay the handover command from the eNB eNB2 towards the UE UE1 but keeps on scheduling the UE UE1 in the macro cell C1.

At position d, the UE UE1 undergoes strong radio interference from the pico cell C2 and detects radio link problems. Thereupon, the UE UE1 starts T310 timer with TS310_HS augmented value.

While T310 timer is running, the UE UE1 tries to resume communication with the serving cell only, namely the macro cell C1.

The interference from the pico cell C2 reach a maximum, and next weaken as the UE UE1 moves away from the pico cell C2. At position e, interference from the pico cell C2 are such that the UE UE1 successfully resumes radio communication with the macro eNB eNB1.

With T310_LS lower value, T310 timer would have expired before the UE UE1 exits the strong interference area of the pico cell C2, and the UE UE1 would have resumed communication with the prepared cell C2 as the best suited cell at that position, or would have dropped the call if the cell C2 was left unprepared. In the former case, an handover back towards the macro cell C1 would have occurred, which handover was likely to fail on account of fast signal fading as the UE UE1 is quickly moving away from the short-range pico cell C2.

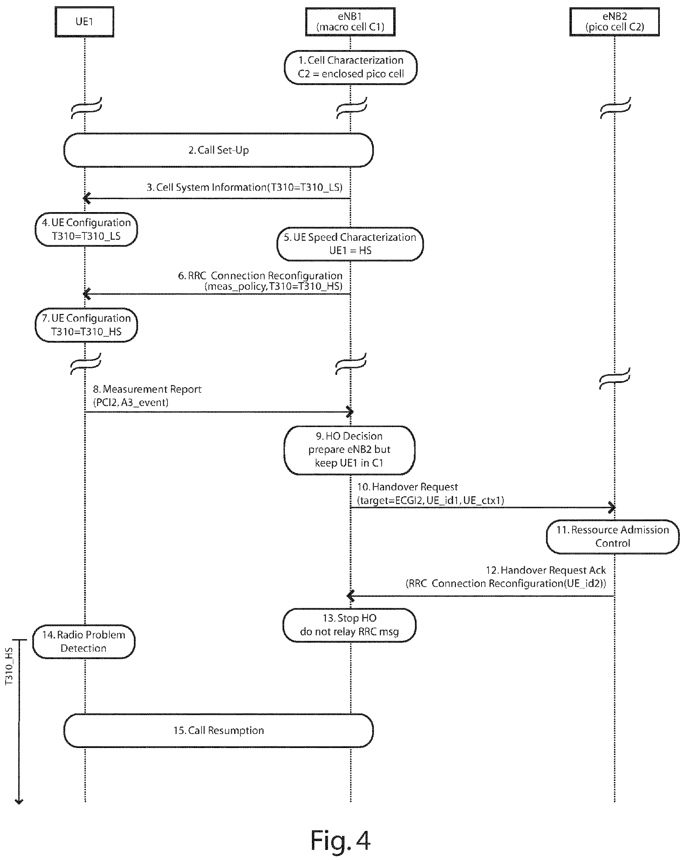

There is seen in fig. 4 a message flow chart representing the most noticeable signaling exchanges between a high-speed UE UE1, a macro eNB eNB1 operating a macro cell C1 as per the present invention, and a pico eNB eNB2 operating a neighboring pico cell C2. The eNBs eNB1 and eNB2 have established a neighboring relationship through a X2 interface.

Initially, the eNB eNB1 characterizes the neighboring cells as being pico cells enclosed by the macro cell C1 or not. Presently, the neighboring cell C2 has been characterized as being a pico cell enclosed by the macro cell C1 (see "1. cell Characterization, C2 = enclosed pico cell" in fig. 4).

Further in time, the UE UE1 establishes a radio communication channel within the macro cell C1 operated by the macro eNB eNB1. After random access, the UE UE1 starts exchanging signaling messages with the eNB eNB1 for establishing downlink and uplink RABs for L1 transport of user traffic (see "2. Call Set-Up" in fig. 4). The macro cell C1 acts as the serving cell for the UE UE1, and has PCI1 as Physical Cell Identifier (PCI).

Alternatively, The UE UE1 may be handed over from a previously visited cell towards the macro cell C1. If so, the eNB eNB1 is prepared by the source eNB with the appropriate radio resources and context for taking over the radio communication session of the UE UE1, and the UE1 re-attaches to the macro cell C1.

Cell system information are broadcast within the macro cell C1, and comprises T310_LS default value as encoded T310 timer value within SYSTEM INFORMATION BLOCK TYPE 2 (see "3. Cell System Information(T310=T310_LS)" in fig. 4).

Accordingly, the UE UE1 configures T310 timer value to T310_LS value (see "4. UE Configuration, T310=T310_LS" in fig. 4).

Meanwhile, the eNB eNB1 characterizes the UE UE1 as being a high-speed or low-speed UE by means of speed information supplied by the UE UE1, and/or by the eNB eNB1, and/or by a source eNB operating a previously visited cell in case of handover of the UE UE1 towards the macro cell C1 (e.g., as derived from the time spent in previous visited cells, or as explicitly encoded by the source eNB). Presently, the UE UE1 is characterized as being a high-speed UE (see "5. UE Speed Characterization, UE1 = HS" in fig. 4).

The eNB eNB1 further sends a RRC CONNECTION RECONFIGURATION message to the UE UE1, whereby the UE UE1 is configured with an ad-hoc T310 timer value T310_HS dedicatedly used by high-speed UEs and higher than T310_LS default value (see "6. RRC Connection Reconfiguration(T310=T310_HS)" and "7. UE Configuration, T310=T310_HS" in fig. 4).

The UE UE1 is further configured with an ad-hoc measurement policy, and more specifically with an A3 measurement event (neighboring becomes offset better than serving) comprising a generic offset parameter OFF1 for fulfilling the event condition, a hysteresis HYS1 for entering and leaving the event condition, and a TTT1 period during which the event condition shall be fulfilled before reporting the measurement event to the serving eNB (see "6. RRC connection Reconfiguration(meas_policy)" in fig. 4).

The UE UE1 measures signal strength and/or signal quality from neighboring cells, and compares them with the respective measurement event thresholds.

At some point in time, the UE UE1 enters the radio coverage area of the pico cell C2. The pico cell cell C2 has PCI2 as PCI. The UE UE1 detects that the receive power/quality of c2 reference signal fulfills the A3 event condition. Consequently, and provided this condition is fulfilled during TTT1 seconds, the UE UE1 sends a MEASUREMENT REPORT message to the serving eNB eNB1 for notifying an A3 measurement event for the target cell C2 (see "8. Measurement Report(PCI2, A3_event)" in fig. 4).

Thereupon, the serving eNB eNB1 makes a decision whether to perform a handover for the UE UE1 from the serving cell C1 towards the target cell C2.

The serving eNB eNB1 determines whether the reporting UE UE1 is a high-speed UE, and whether the reported target cell C2 has been characterized as a pico cell with a radio coverage area enclosed by the radio coverage area of the macro cell C1.

If so, the serving eNB prepares the target eNB eNB2, yet keeps the UE UE1 served by the macro cell C1 (see "9. HO Decision, prepare eNB2 but keep UE1 in C1" in fig. 4).

More specifically, the serving eNB eNB1 sends a HANDOVER REQUEST message to the target eNB eNB2 operating the cell C2 via the X2 interface so as to prepare the target eNB2 to accept the UE UE1. The HANDOVER REQUEST message comprises, as noticeable Information Elements (IE), the E-UTRAN Cell Global identifier (ECGI) ECGI2 of the target pico cell C2, the temporary UE identifier UE_id1 assigned by the source eNB eNB1 in the source cell C1 and used for call resumption by the UE UE1 if any, and the call context UE_ctx1 of the UE UE1 within the source cell C1 (see "10. Handover Request(target=ECGI2, UE_id1, UE_ctx1" in fig. 4).

After resource admission control (see "11. Resource Admission Control" in fig. 4), the target eNB eNB2 reserves the necessary downlink and uplink RABs, and sends a HANDOVER REQUEST ACK message back to the source eNB eNB1, which message including a RRC CONNECTION RECONFIGURATION container to be passed transparently by the source eNB eNB1 to the UE UE1 as a handover command (see "12. Handover Request Ack(RRC Connection Reconfiguration)" in fig. 4).

The serving eNB eNB1 does not relay the RRC CONNECTION RECONFIGURATION container to the UE UE1, meaning the UE UE1 does not attach to the target pico cell C2 and keeps on being served by the macro cell C1 (see "13. Stop HO, do not relay RRC msg" in fig. 4).

The UE UE1 looses radio connection with the serving macro cell C1 on account of strong radio interference from the pico cell C2 and detects out-of-sync indications from the lower layer (see "14. Radio Problem Detection" in fig. 4). Thereupon, the UE UE1 starts T310 timer with TS310_HS augmented value, and first tries to resume radio communication with the serving eNB eNB1.

As T310 timer value is purposely increased, probability radio communication is directly resumed with the serving eNB eNB1 increases as the UE UE1 quickly moves away from the radio coverage area of the pico cell C2 and interference from that cell weaken.

Consequently, the UE UE1 resumes radio communication with the serving eNB eNB1 while T310 timer is still running, and as if no problem occurs (see "15. Call Resumption" in fig. 4). The user may nevertheless notice some short service interruption, especially for real-time traffic having a upper delay bound (e.g., voice traffic).

Would T310_HS timer value still be too short and expires before the UE UE1 was able to resume radio communication with the serving eNB eNB1 (e.g., on account of peculiar radio conditions in that particular pico cell), then the UE UE1 would enter RLF state, would select the best suited cell, presently the pico cell C2, and would send a RRC CONNECTION REESTABLISHMENT REQUEST to the eNB eNB2 (not shown).

The eNB eNB2 would resume the call with the UE UE1 as it has a valid UE context for the UE identity UE_id1. Thereupon, the eNB eNB2 would issue an RLF INDICATION message to the source eNB, presently the eNB eNB1, for notifying call resumption with the UE UE1 and to let the source eNB eNB1 release the corresponding radio resources.

Upon receipt of the RLF INDICATION message, the eNB eNB1 may decide to step-wise increase T310_HS timer value dedicatedly used by the high-speed UEs so as to avoid call resumption with the pico cell C2 for future high-speed UEs.

By so-doing, the eNB eNB1 autonomously adjusts T310_HS value to some optimal T310 timer value for high-speed UEs, taking duly account of the actual surrounding radio environment experienced by the high-speed UEs. For instance, the eNB eNB1 may start with T310_LS default value for high-speed UEs, and let this timer value being gradually increased upon RLF indications from neighboring pico eNBs, till an optimal value is reached for a certain proportion of high-speed UEs (e.g., 90% or 99% of high-speed UEs shall not re-attach to a pico cell) and/or for a certain proportion of enclosed pico cells.

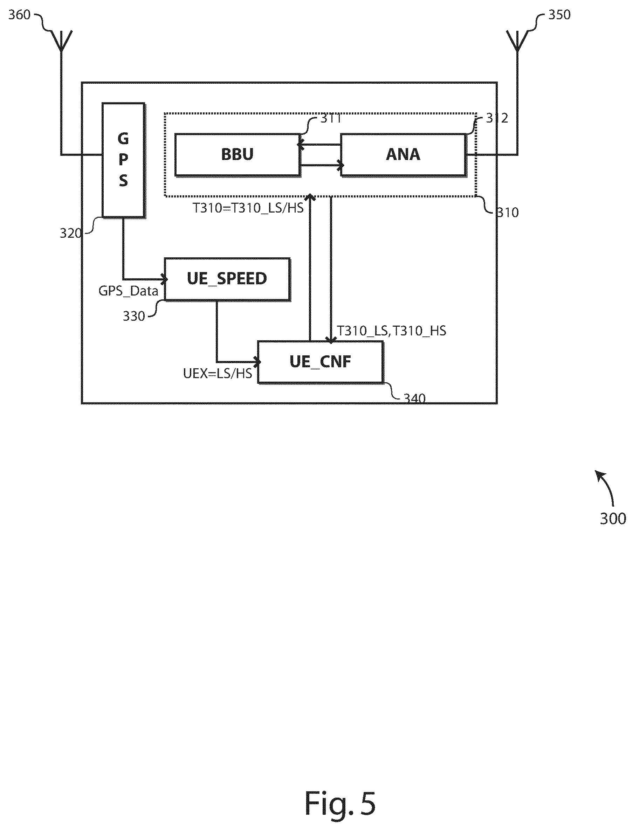

There is seen in fig. 5 a UE 300 comprising the following functional blocks:
- a transceiver 310 comprising a digital base-band unit 311 (or BBU) and an analog band-pass unit 312 (or ANA), and coupled to a first antenna 350,
- a GPS unit 320 coupled to a second antenna 360,
- a UE speed characterization unit 330 (or UE_SPEED), and
- a UE configuration unit 340 (or UE_CNF).

The UE speed characterization unit 330 is coupled to both the GPS unit 320 and the UE configuration unit 340. The UE configuration unit 340 is further coupled to the transceiver 310.

Such a UE is to be operated with a macro eNB as per fig. 2, except that the eNB does not dedicatedly configure the highs-peed UEs with an ad-hoc T310 timer value, but rather broadcasts two T310 timer values as part of the cell system information: T310_HS augmented value to be used for high-speed UEs, and T310_LS default value to be used for all other UEs, wherein T310_LS value is lower than T310_HS value.

The GPS unit 320 supplies periodic GPS positioning data of the UE 300 to the UE speed characterization unit 330 (see "GPS_data" in fig. 5).

The UE speed characterization unit 330 is for determining the speed of the UE 300 from the periodically-reported GPS positioning data, and for classifying the UE 300 as being a low-speed or high-speed UE by comparing the so-determined UE speed to a reference speed threshold. If the UE speed is greater than the reference speed threshold, then the UE 300 is classified as a high-speed UE (HS), else as a low-speed UE (LS).

The UE speed characterization unit 330 may determine the UE speed by means of further speed information, such as by monitoring how quickly a specific radio signal from e.g. a Wifi access point weakens or strengthens.

The UE speed category of the UE 300 is passed to the UE configuration unit 340 for interalia T310 timer adjustment (see "UEX=LS/HS" in fig. 5).

The transceiver 310 listens to SYSTEM INFORMATION BLOCK TYPE 2 as broadcast over the air within the serving cell, and decodes the two T310 timer values T310_HS and T310_LS. The transceiver 210 passes the two decoded values T310_HS and T310_LS to the UE configuration unit 340 for further selection (see " T310_LS, T310_HS" in fig. 5).

The UE configuration unit 340 is for configuring communication parameters of the UE 300, and more specifically for selecting an ad-hoc value for T310 timer. If the UE 300 has been characterized as a high-speed UE, then the UE configuration unit 240 sets T310 timer value to T310_HS, else to T310_LS. The appropriate T310 timer value is then returned to the transceiver 310 for operation (see "T310=T310_LS/T310_HS" in fig. 5)

The macro eNB keeps on characterizing the UEs as high-speed or low-speed UEs, and the neighboring cells as being pi co cells enclosed within the serving cell, for appropriate handover decisions as per fig. 4: if a high-speed UE reports a handover alarm towards a target cell that has been characterized as an enclosed pico cell, then the eNB prepares the target cell, but does not relay the handover command towards the UE and keeps the high-speed UE served by the serving macro cell. As the augmented timer value T310_HS shall be selected by high-speed UEs, radio connection is expected to be resumed directly with the serving eNB once the pico cell has been traversed. If it was not the case, then the macro eNB would be notified by means of an RLF INDICATION message from the target pico eNB, would step-wise increase T310_HS timer value accordingly, and would broadcast T310_HS updated value as updated cell system information in order to avoid future high-speed UEs to re-attach to this pico cell again.

Although the above description has made exhaustive references to LTE technology and terminology, the present invention is equally applicable to, and advantageous for, other mobile communication technologies such as Global System Mobile (GSM), code Division Multiple Access (CDMA), universal Mobile Terrestrial System (UMTS), etc.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

## Claims

1. **A radio access arrangement** (100, 300) comprising:
- a **radio transceiver** (110, 310) for setting up **a radio communication channel** for **a particular mobile device** (UE1) within **a serving macro cell** (C1) having **a large radio coverage area** (210),
- **a radio resource controller** (160) for detecting **a measurement event** for the particular mobile device whereby **a neighboring cell** (C2) was measured as being offset better than the serving macro cell,
- **speed characterization logic** (140, 330) for characterizing the particular mobile device as being a high-speed mobile device according to **speed information** (speed_Info1/2/3, GPS_Data) indicative of a **speed** of the particular mobile device,
- **cell characterization logic** (150) for characterizing the neighboring cell as having **a substantially shorter radio coverage area** (220) enclosed by the large radio coverage area,
- **mobile configuration logic** (160, 340) for configuring the particular mobile device with **a timer value** (T310), which the particular mobile device shall use for call resumption with the serving macro cell upon radio link failure detection,
*wherein* the radio resource controller is further configured, upon detection of the measurement event, to prepare the neighboring cell for accepting the particular mobile device, but to keep the particular mobile device served by the serving macro cell
and *wherein* the timer value is set to **an augmented timer value** (T310_HS) dedicatedly used by high-speed mobile devices and higher than **a default timer value** (T310_LS) used by further mobile devices in the serving macro cell.

2. **A radio access arrangement** (100) according to claim *1, wherein* the radio access arrangement further comprises **communication means** for receiving **an indication** from **a neighboring radio access node** (eNB2) operating the neighboring cell whereby call resumption took place in the neighboring cell with the particular mobile device,
*and wherein* the mobile configuration logic is further configured thereupon to increase the augmented timer value.

3. **A radio access arrangement** (100) according to claim 1 or 2, *wherein* the augmented timer value is set according to **an average or maximum time of stay** of high-speed mobile devices in **a representative pico cell.**

4. **A radio access arrangement** (100) according to claim *1, wherein* the speed information comprises **times of stay** of the particular mobile device in **previously visited cells.**

5. **A radio access arrangement** (100, 300) according to claim 1, *wherein* the speed information is produced by the particular mobile device.

6. **A radio access arrangement** (100) according to claim 1, *wherein* the augmented timer value is encoded in a **configuration message** dedicatedly sent to the particular mobile device.

7. **A radio access arrangement** (300) according to claim *1, wherein* the augmented timer value is transmitted as part of **cell system information** of the serving macro cell.

8. **A radio access arrangement** (100) according to any of claims 1 to 7, *wherein* the radio access arrangement forms part of a **radio access node** (eNB1) operating the serving macro cell.

9. **A radio access arrangement** according to any of claims 1 to 7, *wherein* the radio access arrangement forms part of **a radio access node** operating the serving macro cell, and of **a radio access controller** controlling the operation of the radio access node.

10. A **method** for managing mobility within **a serving macro cell** (C1) having **a large radio coverage area** (210), and comprising:
- setting up **a radio communication channel** with **a particular mobile device** (UE1) within the serving macro cell,
- detecting **a measurement event** for the particular mobile device whereby **a neighboring cell** (C2) was measured as being offset better than the serving macro cell,
- characterizing the particular mobile device as being a high-speed mobile device according to **speed information** (Speed_Info1/2/3) indicative of **a speed** of the particular mobile device,
- characterizing the neighboring cell as having **a substantially shorter radio coverage area** (220) enclosed by the large radio coverage area,
- configuring the particular mobile device with **a timer value** (T310), which the particular mobile device shall use for call resumption with the serving macro cell upon radio link failure detection,
*wherein* the method further comprises, upon detection of the measurement event, preparing the neighboring cell for accepting the particular mobile device, but keeping the particular mobile device served by the serving macro cell,
and *wherein* the timer value is set to **an augmented timer value** (T310_HS) dedicatedly used by high-speed mobile devices and higher than a **default timer value** (T310_LS) used by further mobile devices in the serving macro cell.

## Patentansprüche

1. **Funkzugangsanordnung** (100, 300), umfassend:
- einen **Funktransceiver** (110, 310) zum Einrichten eines **Funkkommunikationskanals** für ein **spezielles mobiles Gerät** (UE1) innerhalb **einer bedienenden Makrozelle** (c1) mit einer **großen Funkabdeckungszone** (210),
- einen **Funkressourcencontroller** (160) zum Erfassen eines **Messereignisses** für das spezielle mobile Gerät, wobei eine **Nachbarzelle** (c2) als versetzt besser als die bedienende Makrozelle gemessen wurde,
- **Geschwindigkeitskennzeichnungslogik** (140, 330) zum Kennzeichnen des speziellen mobilen Geräts als ein mobiles Hochgeschwindigkeitsgerät gemäß **Geschwindigkeitsinformationen** (Speed_Info1/2/3, GPS_Data), die für eine **Geschwindigkeit** des speziellen mobilen Geräts bezeichnend sind,
- **Zellenkennzeichnungslogik** (150) zum Kennzeichnen der Nachbarzelle als eine mit einer **im Wesentlichen kürzeren Funkabdeckungszone** (220), die von der großen Funkabdeckungszone umgeben wird,
- **mobile Konfigurationslogik** (160, 340) zum Konfigurieren des speziellen mobilen Geräts mit einem **Zeitsteuerungswert** (T310), den das spezielle mobile Gerät zur Rufwiederaufnahme mit der bedienenden Makrozelle nach Funkverbindungsfehlererkennung verwenden soll,
*wobei* der Funkressourcencontroller weiterhin ausgelegt ist, um, nach Erfassen des Messereignisses, die Nachbarzelle zum Annehmen des speziellen mobilen Geräts vorzubereiten, aber das spezielle mobile Gerät von der bedienenden Makrozelle bedient zu halten,
und *wobei* der Zeitsteuerungswert auf einen **erhöhten Zeitsteuerungswert** (T310_HS) gesetzt wird, der eigens von mobilen Hochgeschwindigkeitsgeräten verwendet wird und höher ist als ein **Standardzeitsteuerungswert** (T310_LS), der von weiteren mobilen Geräten in der bedienenden Makrozelle verwendet wird.

2. **Funkzugangsanordnung** (100) nach Anspruch 1, *wobei* die Funkzugangsanordnung weiterhin **Kommunikationsmittel** zum Empfangen einer **Angabe** von einem **benachbarten Funkzugangsknoten** (eNB2) umfasst, der die Nachbarzelle betreibt,
*wobei* die Rufwiederaufnahme in der Nachbarzelle mit dem speziellen mobilen Gerät stattfand, und wobei die mobile Konfigurationslogik weiterhin ausgelegt ist, um daraufhin den erhöhten Zeitsteuerungswert zu erhöhen.

3. **Funkzugangsanordnung** (100) nach Anspruch 1 oder 2, *wobei* der erhöhte Zeitsteuerungswert gemäß einer **durchschnittlichen oder maximalen Verweilzeit** von mobilen Hochgeschwindigkeitsgeräten in einer **repräsentativen Picozelle** gesetzt wird.

4. **Funkzugangsanordnung** (100) nach Anspruch 1, *wobei* die Geschwindigkeitsinformationen **Verweilzeiten** des speziellen mobilen Geräts in **zuvor besuchten Zellen** umfassen.

5. **Funkzugangsanordnung** (100, 300) nach Anspruch 1, *wobei* die Geschwindigkeitsinformationen vom speziellen mobilen Gerät erzeugt werden.

6. **Funkzugangsanordnung** (100) nach Anspruch 1, *wobei* der erhöhte Zeitsteuerungswert in einer **Konfigurationsnachricht,** die eigens an das spezielle mobile Gerät gesendet wird, codiert ist.

7. **Funkzugangsanordnung** (300) nach Anspruch 1, *wobei* der erhöhte Zeitsteuerungswert als Teil von **Zellensysteminformationen** der bedienenden Makrozelle übertragen wird.

8. **Funkzugangsanordnung** (100) nach einem beliebigen der Ansprüche 1 bis 7, *wobei* die Funkzugangsanordnung Teil eines **Funkzugangsknotens** (eNB1) ist, der die bedienende Makrozelle betreibt.

9. **Funkzugangsanordnung** nach einem beliebigen der Ansprüche 1 bis 7, *wobei* die Funkzugangsanordnung Teil eines **Funkzugangsknotens** ist, der die bedienende Makrozelle betreibt, und eines **Funkzugangscontrollers,** der den Betrieb des Funkzugangsknotens steuert.

10. **Verfahren** zur Mobilitätsverwaltung innerhalb einer **bedienenden Makrozelle** (c1) mit einer **großen Abdeckungszone** (210), umfassend:
- Einrichten eines **Funkkommunikationskanals** mit einem **speziellen mobilen Gerät** (UE1) innerhalb der bedienenden Makrozelle,
- Erfassen eines **Messereignisses** für das spezielle mobile Gerät, wobei eine **Nachbarzelle** (c2) als versetzt besser als die bedienende Makrozelle gemessen wurde,
- Kennzeichnen des speziellen mobilen Geräts als ein mobiles Hochgeschwindigkeitsgerät gemäß **Geschwindigkeitsinformationen** (Speed_Info1/2/3), die für eine **Geschwindigkeit** des speziellen mobilen Geräts bezeichnend sind,
- Kennzeichnen der Nachbarzelle als eine mit einer **im Wesentlichen kürzeren Funkabdeckungszone** (220), die von der großen Funkabdeckungszone umgeben wird,
- Konfigurieren des speziellen mobilen Geräts mit einem **Zeitsteuerungswert** (T310), den das spezielle mobile Gerät zur Rufwiederaufnahme mit der bedienenden Makrozelle nach Funkverbindungsfehlererkennung verwenden soll,
*wobei* das Verfahren weiterhin, nach Erfassen des Messereignisses, das Vorbereiten der Nachbarzelle zum Annehmen des speziellen mobilen Geräts, aber das Bedienthalten des speziellen mobilen Geräts von der bedienenden Makrozelle umfasst,
und *wobei* der Zeitsteuerungswert auf einen **erhöhten Zeitsteuerungswert** (T310_HS) gesetzt wird, der eigens von mobilen Hochgeschwindigkeitsgeräten verwendet wird und höher ist als ein **Standardzeitsteuerungswert** (T310_LS), der von weiteren mobilen Geräten in der bedienenden Makrozelle verwendet wird.

## Revendications

1. **Dispositif d'accès radio** (100, 300) comprenant :
- **un émetteur-récepteur radio** (110, 310) pour établir **un canal de radiocommunication** pour un **dispositif mobile particulier** (UE1) à l'intérieur **d'une macrocellule de desserte** (C1) ayant **une zone de couverture radio à longue portée** (210),
- **un dispositif de commande de ressources radio** (160) pour détecter **un événement de mesure** pour le dispositif mobile particulier grâce auquel **une cellule voisine** (C2) a été mesurée comme étant mieux décalée que la macrocellule de desserte,
- **une logique de caractérisation de vitesse** (140, 330) pour caractériser le dispositif mobile particulier comme étant un dispositif mobile à vitesse élevée conformément à des **informations de vitesse** (Speed_InfoI/2/3, GPS_Data) indiquant **une vitesse** du dispositif mobile particulier,
- **une logique de caractérisation de cellule** (150) pour caractériser la cellule voisine comme ayant **une zone de couverture radio à portée sensiblement plus courte** (220) à l'intérieur de la zone de couverture radio à longue portée,
- **une logique de configuration mobile** (160, 340) pour configurer le dispositif mobile particulier avec **une valeur de temporisateur** (T310), que le dispositif mobile particulier utilisera pour la reprise d'appel avec la macrocellule de desserte lors de la détection d'un échec de liaison radio,
le dispositif de commande de ressources radio étant en outre configuré, lors de la détection de l'événement de mesure, pour préparer la cellule voisine à accepter le dispositif mobile particulier, mais pour maintenir la desserte par la macrocellule de desserte du dispositif mobile particulier,
et la valeur de temporisateur étant réglée **sur une valeur de temporisateur augmentée** (T310_HS) utilisée de manière dédiée par des dispositifs mobiles à vitesse élevée et supérieure à une **valeur de temporisateur par défaut** (T310_LS) utilisée par d'autres dispositifs mobiles dans la macrocellule de desserte.

2. **Dispositif d'accès radio** (100) selon la revendication 1, le dispositif d'accès radio comprenant en outre des **moyens de communication** pour recevoir **une indication** provenant **d'un noeud d'accès radio voisin** (eNB2) faisant fonctionner la cellule voisine selon laquelle la reprise d'appel s'est produite dans la cellule voisine avec le dispositif mobile particulier,
et la logique de configuration mobile étant en outre configurée sur celle-ci pour augmenter la valeur de temporisateur augmentée.

3. **Dispositif d'accès radio** (100) selon la revendication 1 ou 2, *dans lequel* la valeur de temporisateur augmentée est réglée conformément à **un temps de séjour moyen ou maximum** des dispositifs mobiles à vitesse élevée dans **une picocellule représentative.**

4. **Dispositif d'accès radio** (100) selon la revendication 1, *dans lequel* les informations de vitesse comprennent des **temps de séjour** du dispositif mobile particulier dans des **cellules visitées précédemment.**

5. **Dispositif d'accès radio** (100, 300) selon la revendication 1, dans lequel les informations de vitesse sont produites par le dispositif mobile particulier.

6. **Dispositif d'accès radio** (100) selon la revendication 1, *dans lequel* la valeur de temporisateur augmentée est codée dans un message de configuration envoyé de manière dédiée au dispositif mobile particulier.

7. **Dispositif d'accès radio** (300) selon la revendication 1, *dans lequel* la valeur de temporisateur augmentée est transmise en tant que partie des **informations de système** de **cellules de la macrocellule de desserte.**

8. **Dispositif d'accès radio** (100) selon l'une quelconque des revendications 1 à 7, *dans lequel* le dispositif d'accès radio fait partie **d'un noeud d'accès radio** (eNB1) faisant fonctionner la macrocellule de desserte.

9. **Dispositif d'accès radio** selon l'une quelconque des revendications 1 à 7, le dispositif d'accès radio faisant partie d'un **noeud d'accès radio** faisant fonctionner la macrocellule de desserte et **d'un dispositif de commande d'accès radio** commandant le fonctionnement du noeud d'accès radio.

10. **Procédé** pour gérer la mobilité à l'intérieur **d'une macrocellule de desserte** (C1) ayant une **zone de couverture radio à longue portée** (210) et comprenant les étapes suivantes :
- établir **un canal de radiocommunication** avec un **dispositif mobile particulier** (UE1) à l'intérieur de la macrocellule de desserte,
- détecter **un événement de mesure** pour le dispositif mobile particulier grâce auquel **une cellule voisine** (C2) a été mesurée comme étant mieux décalée que la macrocellule de desserte,
- caractériser le dispositif mobile particulier comme étant un dispositif mobile à vitesse élevée conformément aux **informations de vitesse** (Speed_info1/2/3) indiquant **une vitesse** du dispositif mobile particulier,
- caractériser la cellule voisine comme ayant **une zone de couverture radio à portée sensiblement plus courte** (220) à l'intérieur de la zone de couverture radio à longue portée,
- configurer le dispositif mobile particulier avec **une valeur de temporisateur** (T310), que le dispositif mobile particulier utilisera pour la reprise d'appel avec la macrocellule de desserte lors de la détection d'un échec de liaison radio,
le procédé comprenant en outre, lors de la détection de l'événement de mesure, la préparation de la cellule voisine à accepter le dispositif mobile particulier, mais le maintien de la desserte par la macrocellule de desserte du dispositif mobile particulier,
et la valeur de temporisateur étant réglée sur **une valeur de temporisateur augmentée** (T310_Hs) utilisée de manière dédiée par des dispositifs mobiles à vitesse élevée et supérieure à **une valeur de temporisateur par défaut** (T310_LS) utilisée par d'autres dispositifs mobiles dans la macrocellule de desserte.
